(19) 

**Europäisches Patentamt**
**European Patent Office**
**Office européen des brevets**

(11) **EP 4 252 035 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **21786341.4**

(22) Anmeldetag: **21.09.2021**

(51) Internationale Patentklassifikation (IPC):
**G01S 13/91** (2006.01)   **G08G 1/097** (2006.01)
**G08G 1/04** (2006.01)   **G08G 1/01** (2006.01)
**G01S 17/86** (2020.01)   **G01S 13/86** (2006.01)
**G01S 13/931** (2020.01)   **G01S 17/931** (2020.01)
**G01S 7/40** (2006.01)   **G01S 17/88** (2006.01)

(52) Gemeinsame Patentklassifikation (CPC):
**G08G 1/0116; G01S 7/4082; G01S 13/865; G01S 13/91; G01S 17/88; G08G 1/0133; G08G 1/0145; G08G 1/04; G08G 1/097**

(86) Internationale Anmeldenummer:
**PCT/EP2021/075926**

(87) Internationale Veröffentlichungsnummer:
**WO 2022/111879 (02.06.2022 Gazette 2022/22)**

(54) **AUTOMATISIERTE ZUVERLÄSSIGKEITSPRÜFUNG EINER INFRASTRUKTURGESTÜTZTEN LEITTECHNIK**

AUTOMATED RELIABILITY TESTING OF AN INFRASTRUCTURE-SUPPORTED GUIDANCE SYSTEM

TEST DE FIABILITÉ AUTOMATISÉ D'UN SYSTÈME DE GUIDAGE ASSISTÉ PAR INFRASTRUCTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2020 DE 102020214937**

(43) Veröffentlichungstag der Anmeldung:
**04.10.2023 Patentblatt 2023/40**

(73) Patentinhaber: **Robert Bosch GmbH**
**70442 Stuttgart (DE)**

(72) Erfinder:
• **SCHMID, Rolf**
**8713 Uerikon (CH)**
• **SEIDEL, Christoph**
**91058 Erlangen (DE)**
• **VOSS, Jan Henrik**
**14482 Potsdam (DE)**

(56) Entgegenhaltungen:
**DE-A1- 102018 007 323    US-A1- 2005 203 697**
**US-A1- 2009 219 172    US-A1- 2019 132 709**

## Beschreibung

Die Erfindung betrifft ein Verfahren zur Prüfung der Wirksamkeit einer infrastrukturgestützten Verkehrsleiteinrichtung mit mindestens einem Verkehrsüberwachungssensor. Weiterhin betrifft die Erfindung eine infrastrukturgestützte Verkehrsleiteinrichtung. Überdies betrifft die Erfindung ein autonomes Transportsystem.

Bei der Überwachung und Regelung des Verkehrs spielt zunehmend die sogenannte infrastrukturgestützte Leittechnik, abgekürzt ILT, eine Rolle. Die infrastrukturgestützte Leittechnik umfasst Anzeigen und Überwachungssensorik, mit denen der Straßenverkehr geregelt und überwacht werden kann. Dabei können beispielsweise Verkehrsregeln dynamisch an eine sich ändernde Verkehrssituation, beispielsweise die Verkehrsdichte, angepasst werden. Auch kann die Einhaltung von Verkehrsregeln durch Verkehrsteilnehmer überwacht werden und die Erhebung von Benutzungsgebühren realisiert werden.

Es wäre wünschenswert, die ILT auch für autonome oder teilautonome Fahrzeuge und deren Steuerung zu nutzen, um so deren Schwächen bzw. Informationsdefizite auszugleichen und die Sicherheit des autonomen Fahrens in komplexen Situationen zu erhöhen. Um die Wirksamkeit einer infrastrukturgestützten Leittechnik für autonome Straßenfahrzeuge nachzuweisen, muss die Genauigkeit der Objektdetektion und die Dauer der Prozessierung in Verbindung mit der jeweilig vorliegenden Verkehrssituation gemessen werden. Erst die systematische Zuordnung zur aufgetretenen Verkehrssituation erlaubt den Rückschluss darauf, ob die ILT in einer Gefährdungslage einer Verkehrssituation ausreichend wirksam bzw. zuverlässig ist.

Herkömmlich ist es nicht möglich, die Wirksamkeit der infrastrukturgestützten Leittechnik in einzelnen Verkehrssituationen nachzuweisen. Daher dürfen bisher Informationen einer infrastrukturgestützten Leittechnik nicht für das automatisierte Fahren verwertet werden, sondern sie dürfen ausschließlich menschlichen Fahrern, wie zum Beispiel Fahrzeugbegleitern oder Sicherheitsfahrern, als unverbindliche Zusatzinformationen zur Verfügung gestellt werden. Mithin stehen bisher autonomen Fahrzeugen ausschließlich bordeigene Systeme zur Informationsgewinnung zur Verfügung, was aber aufgrund physikalischer Beschränkungen, wie zum Beispiel ein eingeschränkter Sichtbereich, eine limitierte Rechenkapazität und eine eingeschränkte Energieversorgung, die Fähigkeit eines autonomen Fahrzeugs, komplexe Verkehrssituationen zu erfassen und zu bewältigen, stark einschränkt.

Die Veröffentlichung US 2005/0203697 A1 bezieht sich auf ein straßenseitiges Verkehrsüberwachungssystem mit einem Primärsensor zur Messung eines Parameters von Fahrzeugen, die einen Messpunkt passieren, und einem Sekundärsensor, der eine höhere Genauigkeit aufweist, zur Messung desselben Parameters von Fahrzeugen, die den Messpunkt passieren.

Es besteht also die Aufgabe, auch für komplexe Verkehrssituationen ausreichend zuverlässige Daten zu erzeugen, die auch in sicherheitskritischen Verkehrs- und Mobilitätsanwendungen, wie zum Beispiel das autonome Fahren, genutzt werden können. Diese Aufgabe wird durch ein Verfahren zur Prüfung der Wirksamkeit einer infrastrukturgestützten Verkehrsleiteinrichtung mit mindestens einem Verkehrsüberwachungssensor gemäß Patentanspruch 1, eine infrastrukturgestützte Verkehrsleiteinrichtung gemäß Patentanspruch 9, ein Computerprogrammprodukt nach Anspruch 11 und ein computerlesbares Medium nach Anspruch 12 gelöst.

Bei dem erfindungsgemäßen Verfahren zur Prüfung der Wirksamkeit einer infrastrukturgestützten Verkehrsleiteinrichtung mit mindestens einem Verkehrsüberwachungssensor wird ein mobiles Testobjekt in einen Überwachungsbereich der infrastrukturgestützten Verkehrsleiteinrichtung eingebracht. Der mindestens eine Verkehrsüberwachungssensor, vorzugsweise zwei Verkehrsüberwachungssensoren, kann beispielsweise einen oder mehrere Radarsensoren umfassen. Alternativ oder ergänzend können als Verkehrsüberwachungssensoren auch lichtbasierte Sensoren, wie zum Beispiel optische Sensoren, beispielsweise Kameras, Lidarsysteme oder Infrarotsensoren, eingesetzt werden. Zur Prüfung der Wirksamkeit einer infrastrukturgestützten Verkehrsleiteinrichtung wird ein Referenzsensor eingesetzt. Bevorzugt werden eine Mehrzahl von Referenzsensoren, besonders bevorzugt zwei Referenzsensoren, eingesetzt, um ein mehrdimensionales Verhalten, vorzugsweise eine zweidimensionale Bewegung, Orientierung oder Abmessung von Objekten ermitteln zu können. Von dem mobilen Testobjekt, beispielsweise ein Fahrzeug oder eine am Straßenverkehr teilnehmende Person, werden durch den mindestens einen Verkehrsüberwachungssensor der infrastrukturgestützten Verkehrsleiteinrichtung Sensordaten erfasst. Auch als Verkehrsüberwachungssensoren werden vorzugsweise mehrere Sensoren, besonders bevorzugt zwei Sensoren eingesetzt, um eine zweidimensionale Bewegung, Orientierung oder Abmessung von Objekten ermitteln zu können. Simultan dazu erfolgt ein sensorielles Erfassen von Referenzsensordaten von dem Testobjekt durch einen stationären Referenzsensor. Dabei kann ein Referenzsensor auch eine Gruppe von Referenzsensoren umfassen. Der Referenzsensor umfasst bevorzugt einen Lidarsensor, mit dem räumlich und zeitlich besonders hoch aufgelöste Referenzsensordaten von einem Verkehrsszenario erfasst werden können. Auf Basis eines Vergleichs der Sensordaten des mindestens einen Verkehrsüberwachungssensors der infrastrukturgestützten Verkehrsleiteinrichtung mit den Referenzsensordaten des Referenzsensors wird schließlich eine Wirksamkeit der infrastrukturgestützten Verkehrsleiteinrichtung ermittelt bzw. geprüft. Bei dem Vergleich wird insbesondere eine Abweichung zwischen der Sensormessung des Verkehrsüberwachungssensors und der Sensormessung des Referenzsensors als Kriterium für eine Informationsqualität der Sensordaten der infrastrukturgestützten Verkehrsleiteinrichtung herangezogen. Vorteilhaft wird eine Echtzeitprüfung einer infrastrukturgestützten Verkehrsleiteinrichtung auf korrekte Funktion ermöglicht, so dass die von der infrastrukturgestützten Verkehrsleiteinrichtung erzeugten Sensordaten von autonomen oder zumindest teilautonomen Fahrzeugen mit ausreichender Sicherheit für eine Fahrtaktikplanung, insbesondere die Erzeugung von Fahrtrajektorien und die Reaktion auf komplexe Verkehrssituationen genutzt werden können.

Die erfindungsgemäße infrastrukturgestützte Verkehrsleiteinrichtung umfasst mindestens einen Verkehrsüberwachungssensor, vorzugsweise eine Mehrzahl von solchen Sensoreinheiten, zur Erfassung von Sensordaten von einer Verkehrszelle bzw. einem Verkehrsüberwachungsbereich. Als Verkehrszelle soll in diesem Zusammenhang ein von einer Infrastruktureinheit einer infrastrukturgestützten Verkehrsleiteinrichtung überwachter Verkehrsbereich verstanden werden, in dem sich Verkehrsteilnehmer, beispielsweise Fahrzeuge oder Personen, aufhalten und bewegen. Befinden sich zum Beispiel Überwachungssensoren in einem Kreuzungsbereich, so umfasst die Verkehrszelle den überwachten Teil des Kreuzungsbereichs. Weiterhin weist die erfindungsgemäße infrastrukturgestützte Verkehrsleiteinrichtung mindestens eine Referenzsensoreinheit, vorzugsweise eine Mehrzahl von Referenzsensoreinheiten, zur Erfassung von Referenzsensordaten von der Verkehrszelle auf. Mit mehreren Referenzsensoren lassen sich zwei- oder dreidimensionale Daten von einem Verkehrsgeschehen erfassen.

Teil der erfindungsgemäßen infrastrukturgestützten Verkehrsleiteinrichtung ist auch eine Vergleichseinrichtung zum Ermitteln einer Wirksamkeit des infrastrukturgestützten Verkehrsüberwachungssystems auf Basis eines Vergleichs der Sensordaten des infrastrukturgestützten Verkehrsüberwachungssystems mit den Referenzsensordaten des mindestens einen Referenzsensors. Ein solcher Vergleich erlaubt insbesondere eine Prüfung der räumlichen und zeitlichen Kohärenz der jeweils zeitlich gekennzeichneten Sensordaten mit Referenzsensordaten. Besteht eine ausreichende Übereinstimmung zwischen den gleichzeitig erfassten Sensordaten und Referenzsensordaten, so kann von einer korrekten Funktion der infrastrukturseitigen Sensoren ausgegangen werden. Die erfindungsgemäße infrastrukturgestützte Verkehrsleiteinrichtung weist aufgrund der Prüffunktion eine ausreichende Zuverlässigkeit auf, um autonome oder zumindest teilautonome Fahrzeuge mit exakten Sensordaten zu versorgen und so insbesondere komplexe Verkehrssituationen sicherer bewältigen zu lassen.

Vorteilhaft werden mit Hilfe der erfindungsgemäßen infrastrukturgestützten Verkehrsleiteinrichtung zuverlässige Objektdaten erzeugt, auf deren Basis autonom oder teilautonom gesteuerte Fahrzeuge auch komplexe Situationen im Straßenverkehr erfassen können und eine angemessene Fahrtaktik planen können.

Das erfindungsgemäße autonome Transportsystem weist mindestens ein zumindest teilautonom, vorzugsweise autonom gesteuertes Fahrzeug und eine erfindungsgemäße infrastrukturgestützte Verkehrsleiteinrichtung, auch Verkehrsleitsystem genannt, auf. Das zumindest teilautonom gesteuerte Fahrzeug ist dazu eingerichtet, von der infrastrukturgestützten Verkehrsleiteinrichtung erzeugte und geprüfte Sensordaten zu empfangen und auf Basis dieser Sensordaten eine zumindest teilautonome, vorzugsweise autonome Steuerung durchzuführen. Das erfindungsgemäße autonome Transportsystem teilt die Vorteile der erfindungsgemäßen infrastrukturgestützten Verkehrsleiteinrichtung.

Einige Komponenten der erfindungsgemäßen infrastrukturgestützten Verkehrsleiteinrichtung und des erfindungsgemäßen autonomen Transportsystems können zum überwiegenden Teil in Form von Softwarekomponenten ausgebildet sein. Dies betrifft insbesondere Teile der Vergleichseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher in einem autonomen oder zumindest teilautonomen Transportsystem vorhandene Rechnersysteme nach einer eventuellen Ergänzung durch zusätzliche Hardwareelemente, wie zum Beispiel Referenzsensoren und Hardware zur Auswertung und Darstellung der erfassten Sensordaten, auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer infrastrukturgestützten Verkehrsleiteinrichtung ladbar ist, mit Programmabschnitten, um die durch Software realisierbaren Schritte des erfindungsgemäßen Verfahrens auszuführen, wenn das Computerprogramm in der infrastrukturgestützten Verkehrsleiteinrichtung ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen.

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens zur Prüfung der Wirksamkeit einer infrastrukturgestützten Verkehrsleiteinrichtung mit mindestens einem Verkehrsüberwachungssensor umfassen die Referenzsensordaten einen Referenzzeitstempel. Ein solcher Zeitstempel ermöglicht eine Zuordnung der Referenzsensordaten zu simultan erfassten Sensordaten der infrastrukturgestützten Verkehrsleiteinrichtung. Vorteilhaft kann neben einer korrekten Positionsmessung der Sensoren der infrastrukturgestützten Verkehrsleiteinrichtung auch eine zeitlich korrekte Wiedergabe von Sensordaten der infrastrukturgestützten Verkehrsleiteinrichtung geprüft werden.

Bevorzugt betrifft der Vergleich in dem erfindungsgemäßen Verfahren einen oder mehrere Objektorte des mobilen Testobjekts. Vorteilhaft kann eine korrekte Positionsermittlung der infrastrukturgestützten Verkehrsleiteinrichtung auf Basis der Sensordaten durch Hinzuziehung der Referenzsensordaten und einen Vergleich der beiden genannten Datensätze geprüft werden. Eine korrekte Positionsangabe ist notwendig für eine Abstandsermittlung und Richtungsermittlung eines Objekts beim autonomen Fahren.

Bevorzugt umfasst der beschriebene Vergleich auch einen Vergleich der Objektgröße und/oder des Geschwindigkeitsvektors des mobilen Testobjekts. Die Prüfung dieser zusätzlichen Daten auf Korrektheit kann eine besonders zuverlässige Fahrtaktikplanung von autonomen Fahrzeugen ermöglichen, da in einem solchen Fall dem autonomen Fahrzeug von der Infrastruktur zuverlässige Informationen hinsichtlich der Ausdehnung, Orientierung, Bewegungsrichtung und der künftigen Position eines Objekts übermittelt werden können und so eine künftige Entwicklung eines Verkehrsszenarios in einer von einer Verkehrsleiteinrichtung überwachten Verkehrszelle besonders exakt prognostiziert werden kann.

Besonders bevorzugt umfasst der Vergleich eine statische und/oder dynamische Auswertung einer Leuchtspur des mobilen Testobjekts. Eine solche Leuchtspur ergibt sich aus einer hochfrequenten sensoriellen Abtastung von Objekten, beispielsweise mit Hilfe eines Lidarsystems oder eines Radarsystems. Bewegt sich ein Objekt innerhalb eines Abtastintervalls eine kürzere Strecke als seine Abmessungen, so ergibt sich bei einer Darstellung des Objekts und dessen Position eine kontinuierliche Leuchtspur. Unterschiedlichen Zeitpunkten zugeordnete Positionen können in einer Karte unterschiedliche Leuchtfarben aufweisen, so dass gleichen Messzeitpunkten unterschiedlicher Objekte dieselbe Farbe zugeordnet ist und somit zeitgleich eingenommene Positionen unterschiedlicher Objekte dargestellt werden können. Vorteilhaft lässt sich ein dynamisches Verkehrsgeschehen in einer statischen Darstellung wiedergeben.

Es ist bekannt, dass ein Unfallrisiko stark mit der Komplexität einer Verkehrssituation zusammenhängt. Beispielsweise entfallen etwa 50% aller Unfälle mit Personenschaden innerorts auf Kreuzungen und Einmündungen. Daher gelingt der hinreichende Nachweis der Wirksamkeit einer ILT nur in Verbindung mit einer Ermittlung und Aufzeichnung der jeweiligen Verkehrssituation. Die Anwendung der Leuchtspurdarstellung ist für eine Klärung von Unfällen sehr hilfreich. Das erfindungsgemäße Verfahren erlaubt es somit, absolute Messdaten zu kontextualisieren. Mithin kann die ILT in einen Bezug zu der tatsächlich auftretenden Gefährdung im Verkehr gesetzt werden. Dies ist eine hinreichende Bedingung für die Anwendung von Infrastrukturdaten, beispielsweise für das autonome Fahren.

Um eine ausreichende Zuverlässigkeit und Aussagekraft der Referenzmessung zu erreichen, wird vor einer Prüfung der Wirksamkeit einer infrastrukturgestützten Verkehrsleiteinrichtung eine Kalibrierung des Referenzsensors bezüglich einer Ermittlung einer Position und eines der Position zugeordneten Zeitpunkts durchgeführt.

Bevorzugt erfolgt die Kalibrierung mit einer Toleranz von weniger als 0,2 Metern für die Position und von weniger als 10 ms für die Synchronizität zwischen Sensormessung und Referenzmessung, um eine ausreichende Verkehrssicherheit und Zuverlässigkeit der Prüfung bei üblichen Verkehrsgeschwindigkeiten und Objektgrößen zu erreichen.

Erfindungsgemäß erfolgt auch eine Kalibrierung einer Messung einer Orientierung des Referenzsensors durch Ermittlung einer Orientierung eines nicht ausgedehnten Objekts auf Basis der Bewegungsrichtung des Objekts durch einen Vergleich mit einer entsprechenden Messung der infrastrukturseitigen Verkehrsüberwachungssensoren. Vorteilhaft wird mit der Bewegungsrichtung eine weitere wichtige Information, welche für eine Erfassung einer komplexen Verkehrssituation nützlich ist, kalibriert und damit exakt ermittelbar und vergleichbar gemacht. Besonders bevorzugt erfolgt eine Kalibrierung einer Messung einer Orientierung eines ausgedehnten Objekts durch eine Ermittlung einer Orientierung des ausgedehnten Objekts auf Basis einer Singulärwertzerlegung oder einer Hauptachsenanalyse.

Eine Messung einer Orientierung eines Objekts kann nützlich sein, um eine voraussichtliche Bewegungsrichtung des Objekts zu ermitteln, was bei einer Steuerung eines autonomen Fahrzeugs besonders wichtig ist. Grundlage sind hier dem Infrastrukturobjekt entsprechende Cluster von Messpunkten des Referenzsensors. Die so ermittelte Orientierung kann so mit der des Infrastrukturobjektes verglichen werden.

Auch bevorzugt erfolgt eine Kalibrierung einer Messung einer Geschwindigkeit durch eine Ermittlung eines räumlichen Versatzes eines Objekts auf Basis einer Mehrzahl konsekutiver Messungen des Objekts, vorzugsweise unter Berücksichtigung der Orientierung des Objekts. Die exakte Ermittlung einer Geschwindigkeit eines Objekts ist besonders wichtig für eine korrekte Erfassung einer komplexen Verkehrssituation, insbesondere für ein teilautonom oder autonom fahrendes Fahrzeug.

Es kann auch eine Kalibrierung einer Messung einer Abmessung eines Objekts durch Verfolgung des Objekts über einen längeren Zeitraum erfolgen. Eine exakte Messung einer Abmessung eines Objekts erlaubt es, Abstände zu einem Objekt exakter zu ermitteln. Außerdem lassen sich aus Abmessungen von Objekten Rückschlüsse für deren Klassifizierung und Identifizierung ziehen.

Die Erfindung wird im Folgenden unter Hinweis auf die beigefügten Figuren anhand von Ausführungsbeispielen noch einmal näher erläutert. Es zeigen:

FIG 1 eine schematische Darstellung eines Verkehrsszenarios mit infrastrukturseitigen Sensoren zur Überwachung einer Verkehrssituation,

FIG 2 eine schematische Darstellung einer infrastrukturgebundenen Verkehrsleiteinrichtung mit einer Prüfungseinrichtung gemäß einem Ausführungsbeispiel der Erfindung,

FIG 3 eine schematische Darstellung einer Abweichung einer Referenzmessung von einer Messung durch ein Verkehrsleitsystem,

FIG 4 eine schematische Darstellung eines autonomen Transportsystems gemäß einem Ausführungsbeispiel der Erfindung,

FIG 5 eine schematische Darstellung von sogenannten Leuchtspurbildern, welche eine Bewegung eines Objekts im Verkehrsgeschehen veranschaulichen,

FIG 6 ein Flussdiagramm, welches ein Verfahren zur Prüfung der Wirksamkeit einer infrastrukturgestützten Verkehrsleiteinrichtung gemäß einem Ausführungsbeispiel der Erfindung veranschaulicht,

FIG 7 ein Schaubild, welches den Verlauf der Verlässlichkeit der übermittelten Sensordaten und die zugehörige erreichte Sicherheitsanforderungsstufe anzeigt.

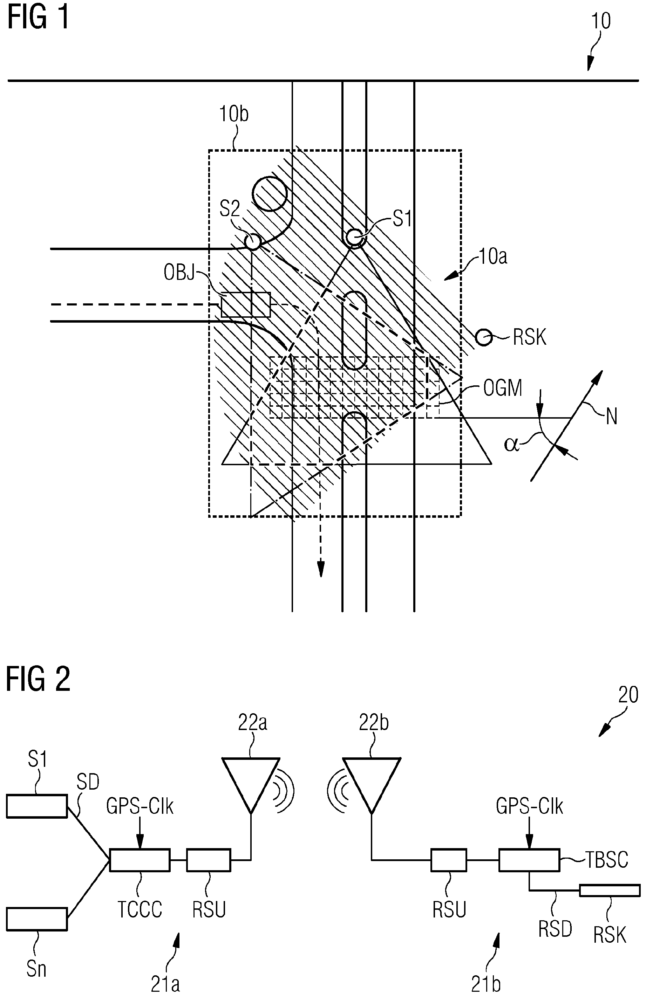

In FIG 1 ist ein Verkehrsszenario 10 mit einer Verkehrsüberwachungseinrichtung 10a, auch Verkehrsleiteinrichtung genannt, mit infrastrukturseitigen Sensoren S1, S2 zur Überwachung einer Verkehrssituation veranschaulicht. Das Verkehrsszenario 10 umfasst eine Einmündung. Im Einmündungsbereich sind auch die zwei Sensoren S1, S2 der Verkehrsleiteinrichtung 10a positioniert, von denen ein erster Sensor S1 auf einer Verkehrsinsel auf der Hauptstraße der Einmündung, welche in der Darstellung vertikal von oben nach unten verläuft, angeordnet ist und ein Radarsystem umfasst und ein zweiter Sensor S2 an einer in der Darstellung horizontal verlaufenden Abzweigung von der Hauptstraße aus der Richtung zur Einmündung hin betrachtet auf der linken Seite der Abzweigung angeordnet ist und ein Lidarsystem umfasst. Beide Sensoren S1, S2 überwachen den Einmündungsbereich. Ein erster Überwachungsbereich des ersten Sensors S1 ist durch ein Dreieck mit durchgezogenen Kanten dargestellt. Der zweite Überwachungsbereich des zweiten Sensors ist ebenfalls als Dreieck, aber mit abwechselnd punktiert und gestrichelt gezeichneten Kanten dargestellt. Die beiden Überwachungsbereiche des ersten Sensors S1 und des zweiten Sensors S2 bilden dort einen gemeinsamen Überwachungsbereich, wo sie sich überschneiden. Eine Begrenzungslinie dieses gemeinsamen, sechseckigen Überwachungsbereichs ist in FIG 1 gestrichelt dargestellt. Der erste Überwachungsbereich und der zweite Überwachungsbereich überlappen einander weitgehend.

In dem Einmündungsbereich befindet sich zudem ein Fahrzeug OBJ, welches in der linken Bildhälfte dargestellt ist, von der Abzweigung her auf die Einmündung zugefahren ist und an der Einmündung hält, um im Folgenden nach rechts auf die Hauptstraße abzubiegen. Der von den beiden Sensoren S1, S2 überwachbare Bereich kann auch als Verkehrszelle 10b, die in FIG 1 durch ein gestricheltes Rechteck begrenzt ist, bezeichnet werden. Teile dieses überwachbaren Bereichs, die im Bild nicht von einem der beiden Sensoren S1, S2 aktuell abgedeckt sind, können beispielswiese durch ein Schwenken eines Sensors S1, S2 ausgeleuchtet werden.

Die Verkehrsüberwachungseinrichtung 10a umfasst auch einen Referenzsensor RSK, mit dem ebenfalls die Einmündung überwacht wird. Ein von dem Referenzsensor RSK überwachter Bereich ist als Kreissektor mit gestrichelter Schraffur dargestellt. Der Kreissektor überdeckt die Überwachungsbereiche des ersten Sensors S1 und des zweiten Sensors S2 weitgehend. In dem in FIG 1 gezeigten Szenario wird das an der Einmündung stehende Fahrzeug OBJ gerade zumindest teilweise von dem zweiten Sensor S2 der Verkehrsüberwachungseinrichtung 10a erfasst. Simultan wird das Fahrzeug OBJ aber auch von dem Referenzsensor RSK sensoriell erfasst. Die Bewegung des Fahrzeugs OBJ kann nun von den beiden Sensoren S1 und S2 und gleichzeitig von dem Referenzsensor RSK überwacht werden. Zur Überprüfung einer korrekten Wiedergabe der Position, des Geschwindigkeitsvektors sowie der Größe des überwachten Objekts OBJ werden die Referenzsensordaten RSD des Referenzsensors RSK mit einem Zeitstempel versehen und mit den Sensordaten SD der Sensoren S1 und S2 der Verkehrsüberwachungseinrichtung 10a verglichen. Ergibt sich eine Übereinstimmung der Sensordaten SD der Sensoren S1, S2 der Verkehrsüberwachungseinrichtung 10a mit den Referenzsensordaten RSD, gegebenenfalls nach einer Umrechnung der Sensordaten, um die unterschiedliche Position und den unterschiedlichen Beobachtungswinkel der einzelnen Sensoren S1, S2 zu berücksichtigen, so wird damit ermittelt, dass die Sensorik der Verkehrsüberwachungseinrichtung 10a korrekt funktioniert. Andernfalls kann anhand eines negativen Prüfungsergebnisses auf einen Defekt eines Sensors S1, S2 geschlossen werden und es können entsprechende Reparatur- und Wartungsmaßnahmen eingeleitet werden. In FIG 1 ist unten rechts im Bild auch ein Pfeil dargestellt, der eine Nordrichtung N darstellt. In diesem Zusammenhang ist auch ein Winkel α gezeigt, um den eine sogenannte Gitterbelegungskarte OGM (occupancy grid map) gegen die Nordrichtung N verdreht angeordnet ist. Mit einer solchen Gitterbelegungskarte können vereinfacht Positionen und Ausdehnungen von Objekten erfasst werden.

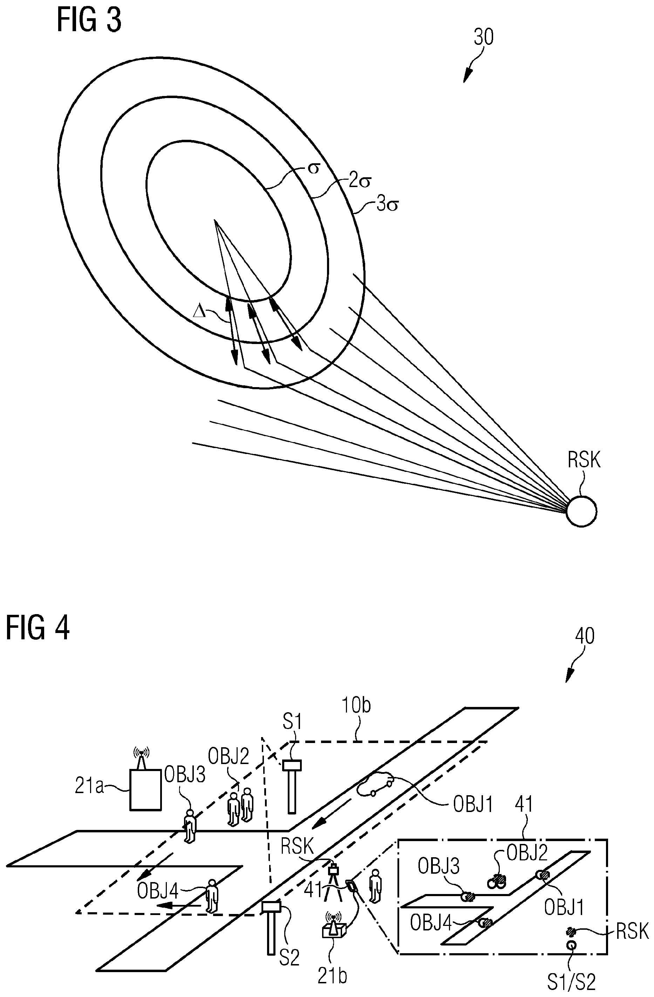

In FIG 2 ist ein infrastrukturgebundenes Verkehrsüberwachungssystem 20, auch Verkehrsleiteinrichtung genannt, mit einem Sensorsystem 21a in der linken Bildhälfte und einem Referenzsensorsystem 21b in der rechten Bildhälfte gezeigt. Das Sensorsystem 21a umfasst eine Mehrzahl von Sensoren S1, ..., Sn, beispielsweise Radarsensoren, mit denen eine Verkehrszelle kontinuierlich überwacht wird. Weiterhin umfasst das Sensorsystem 21a eine sogenannte zentrale Recheneinheit TCCC (traffic cell control computer = Verkehrszellenkontrollrechner), welche die Sensordaten SD der Sensoren S1, ..., Sn verarbeitet und über einen von einem Satellitennavigationssystem übermittelten Zeitstempel GPS-Clk synchronisiert ist. Anders ausgedrückt ist der Aufnahmezeitpunkt der jeweiligen Sensordaten SD der Sensoren S1, ..., Sn durch den Zeitstempel GPS-Clk exakt definiert. Das Sensorsystem 21a umfasst auch eine Sende-/Empfangseinheit RSU, die auch als sogenannte "Road Side Unit" bezeichnet wird. Die Sende-/Empfangseinheit RSU übermittelt die mit einem Zeitstempel versehenen Sensordaten SD über eine Sende-/Empfangsantenne 22a an ein autonomes Fahrzeug (nicht gezeigt) oder zum Beispiel an die Referenzsensoreinheit 21b, welche auf der rechten Seite von FIG 2 gezeigt ist. Die Referenzsensoreinheit 21b kann über eine Sende-/Empfangsantenne 22b und eine eigene Sende-/Empfangseinheit RSU die Sensordaten SD des Sensorsystems 21a empfangen und mit Referenzsensordaten RSD vergleichen. Die Referenzsensoreinheit 21b erfasst die Referenzsensordaten RSD durch einen Referenzsensor RSK und vergleicht sie in einer zentralen Recheneinheit TBSC der Referenz (TBSC = technic box shuttle connector), welche auch als Vergleichseinheit bezeichnet wird. Die zentrale Recheneinheit TBSC erhält zu den Referenzsensordaten RSD jeweils einen Zeitstempel GPS-Clk von einem Satellitennavigationssystem. An die Referenzsensoreinheit 21b kann zum Beispiel eine Anzeigeeinheit (siehe FIG 4) angeschlossen sein, die einer Wartungsperson eine Information anzeigt, inwieweit die Sensordaten SD und die Referenzsensordaten RSD übereinstimmen.

In FIG 3 ist schematisch eine Kalibrierung eines Referenzsensors RSK (siehe rechts unten in FIG 3) auf eine Sensorik eines Sensorsystems 21b einer Verkehrsleiteinrichtung 20 veranschaulicht. Bei der Kalibrierung wird eine vektorielle Abweichung Δ zwischen der Sensormessung bzw. Objektschätzung der Infrastruktur und der Referenzsensormessung eines Objekts an mehreren assoziierbaren Messpunkten in zwei Dimensionen veranschaulicht.

Die Summe $\Delta_{total}$ der Vektoren Δ beschreibt ein Maß für die mittlere Abweichung der Position des Objekts, welche durch die Referenzmessung des Referenzsensors RSK ermittelt wurde, von der Position des Objekts, welche durch die reguläre Sensorik der Infrastruktur gemessen wurde.

$$\Delta_{total} = \sum_{i=1}^{N} \Delta \quad . \qquad (1)$$

Dabei sind i und N ganze Zahlen und 1 <= i <= N. Allerdings ergibt sich aus dem Ergebnis der vorstehend beschriebenen Kalibrierung nur eine Aussage über die Abweichung des Orts des Objekts und nicht über die Orientierung des Objekts bzw. dessen Abweichung zwischen der Sensormessung und der Referenzsensormessung.

Die Orientierung nicht ausgedehnter Ziele, wie zum Beispiel Fußgänger, wird aus der Bewegungsrichtung ermittelt. Die Orientierung von ausgedehnten Zielen, wie zum Beispiel Autos, lässt sich z.B. mit Hilfe der Singulärwertzerlegung oder einer Hauptachsenanalyse ermitteln. Grundlage sind hier dem Infrastrukturobjekt entsprechende Cluster von Messpunkten des Referenzsensors. Die so ermittelte Orientierung kann so mit der Orientierung des Infrastrukturobjektes verglichen werden.

Herangehensweisen für den Vergleich der Geschwindigkeit sowie der Abmessungen sind auf diese Weise ebenfalls umsetzbar. Bei letzterer muss bei einem einzelnen Referenzsensor i.d.R. ein größerer Zeitraum betrachtet werden. Ersterer wird aus dem räumlichen Versatz konsekutiver Messungen ggf. unter Berücksichtigung der Orientierung bestimmt.

In FIG 4 ist ein Szenario 40 gezeigt, bei dem ein Aufnahmebereich 10b bzw. eine Verkehrszelle durch zwei infrastrukturseitige Sensoren S1, S2, die Teil eines Infrastrukturleitsystems 21a sind, welches im linken Teil der FIG 4 darstellt ist, überwacht wird. Ein Referenzsensorsystem 21b, welches rechts neben dem zweiten Sensor S2 dargestellt ist, wird zur Überwachung der Sensorik S1, S2 des Infrastrukturleitsystems 21a durch einen Referenzsensor RSK genutzt, wobei eine Wartungsperson auf eine Anzeige 41 schaut, welche mit dem Referenzsensorsystem 21b über eine Datenleitung verbunden ist, und rechts unten in FIG 4 vergrößert und abwechselnd gepunktet und gestrichelt umrahmt dargestellt ist. Auf der Anzeige sind einzelne Objekte oder Objektgruppen OBJ1, OBJ2, OBJ3, OBJ4 dargestellt, einmal als weiß gefüllte und schwarze umrandeter Kreis an der von der Sensorik S1, S2 ermittelten Position und einmal als grau gefüllter und schwarz umrandeter Kreis an der von der Referenzsensorik ermittelten Position. Bewegungsrichtungen der Objekte bzw. Objektgruppen OBJ1, OBJ2, OBJ3, OBJ3 sind in FIG 4 mit Pfeilen dargestellt. Bei einem ersten Objekt OBJ1 handelt es sich um ein Kraftfahrzeug, bei den übrigen Objekten bzw. Objektgruppen OBJ2, OBJ3, OBJ4 handelt es sich um Personengruppen oder einzelne Personen. Wie in FIG 4 zu erkennen ist, sind die beiden grau und weiß gefüllt dargestellten Vergleichspositionen der Objekte OBJ1, OBJ2, OBJ3, OBJ4 jeweils zu ein und demselben Zeitpunkt, was durch den bereits erwähnten Zeitstempel nachweisbar ist, annähernd deckungsgleich angeordnet, so dass die Prüfung des Infrastrukturleitsystems 21a in FIG 4 positiv ausfällt.

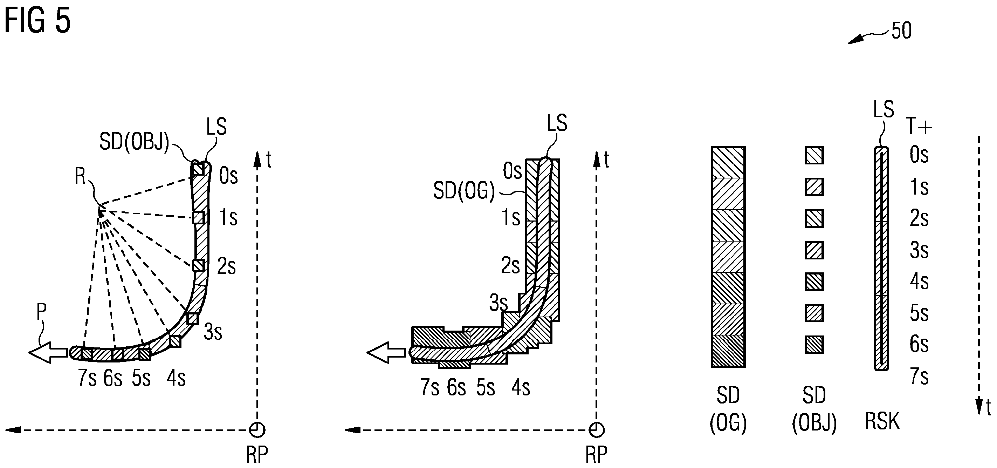

In FIG 5 ist eine schematische Darstellung 50 mit Hilfe sogenannter Leuchtspuren LS, einmal in dem linken Schaubild als Darstellung eines Objekts OBJ und einmal in dem mittleren Schaubild als Darstellung einer Rasterfläche einer Gitterbelegung OG (occupancy grid), welche mit dem in dem linken Schaubild erfassten Objekt OBJ belegt ist, veranschaulicht. Rechts in FIG 5 ist eine Legende Schraffuren, welche Farben bzw. Grauwerte symbolisieren sollen, für die Gitterbelegung OG, für das Objekt OBJ sowie für einen Zeitstempel der Referenzsensordaten RSD des Referenzsensors RSK dargestellt. Anstatt Grauwerten oder Farben sind der besseren Unterscheidbarkeit wegen in FIG 5 Schraffuren mit unterschiedlicher Orientierung und Dichte gewählt.

In dem linken Schaubild ist eine Rechtskurve veranschaulicht, die ein Objekt OBJ fährt, und dessen Fahrtrichtung ist mit einem großen Pfeil P angezeigt. Eine Aufnahmerichtung R, in der das Objekt OBJ an verschiedenen Positionen erfasst wurde, ist mit gestrichelt eingezeichneten Pfeilen R in dem linken Schaubild veranschaulicht. Die Position RP des Referenzsensors RSK im Ursprung des jeweiligen Schaubilds ist ebenfalls dargestellt. Wie in dem linken Schaubild zu erkennen ist, ändert das Objekt OBJ zu verschiedenen Zeitpunkten seine Position, um eine Rechtskurve zu beschreiben. Die durch den Referenzsensor RSK mit einem Lidar erfassten Positionen, welche eine durchgezogene Leuchtspur LS bilden, stimmen mit den durch die Sensorik S1, S2 erfassten diskreten Positionen des Objekts OBJ, die in der Legende mit "SD" bzw. "OG" bezeichnet sind, gut überein. Die kontinuierliche Leuchtspur LS des Referenzsensors RSK ergibt sich daraus, dass die Abtastung durch den Referenzsensor RSK mit einer deutlich höheren Frequenz, beispielsweise 25 Hz, also jede 1/25 Sekunde erfolgt, als die Abtastungsfrequenz durch die Sensorik S1, S2, die im linken Schaubild mit einem Radarsensor und beispielsweise mit 10 Hz, also jede 1/10 Sekunde erfolgt. Da die Abmessungen eines Objekts OBJ größer sind als der Weg, den das Objekt OBJ zwischen zwei Abtastungen zurücklegt, ergibt sich eine kontinuierliche Leuchtspur LS für das von dem Referenzsensor RSK erfasste Signal RSD. Da die Abtastungsfrequenz durch die Sensorik S1, S2 der Verkehrsleitinfrastruktur viel niedriger eingestellt ist, ergeben sich für die Sensordaten SD bei der Objekterfassung anders als bei dem Referenzsignal RSD einzelne quadratische diskrete Messpunkte.

In dem mittleren Schaubild ist die von dem Objekt OBJ beschriebene Linkskurve durch Gitterbelegungen OG dargestellt. Dabei belegt das Objekt OBJ, in diesem Fall ein Fahrzeug, mehrere Raster einer Gitterbelegungskarte (occupancy grid map). Infolge eines Nachzieheffekts überlappen sich die Belegungen zu unterschiedlichen Zeitpunkten, so dass einzelne mit unterschiedlichen Schraffierungen belegte Rechtecke, welche unterschiedlichen Zeitpunkten t zugeordnet sind, sich ebenfalls überlappen. In dem mittleren Schaubild ist eine Übereinstimmung der Referenzsensorwerte, welche von der kontinuierlichen Leuchtspur LS gebildet werden, und den diskreten Gitterbelegungen OG klar zu erkennen.

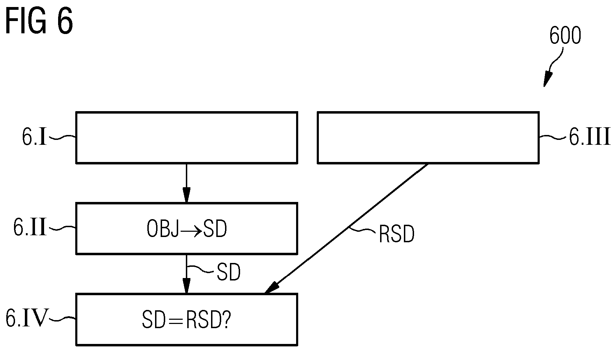

In FIG 6 ist ein Flussdiagramm 600 gezeigt, welches ein Verfahren zur Prüfung der Wirksamkeit einer infrastrukturgestützten Verkehrsleiteinrichtung mit mindestens einem Verkehrsüberwachungssensor gemäß einem Ausführungsbeispiel der Erfindung veranschaulicht. Bei dem Schritt 6.I fährt ein autonom gesteuertes Fahrzeug OBJ in einen Überwachungsbereich der infrastrukturgestützten Verkehrsleiteinrichtung 10a. Bei dem Schritt 6.II werden Sensordaten SD von dem autonomen Fahrzeug OBJ als Testobjekt durch mehrere Verkehrsüberwachungssensoren S1, S2 der infrastrukturgestützten Verkehrsleiteinrichtung 10a erfasst. Bei dem Schritt 6.III erfolgt ein simultanes sensorielles Erfassen von Referenzsensordaten RSD von dem Testobjekt OBJ durch einen Referenzsensor RSK. Schließlich wird bei dem Schritt 6.IV eine Wirksamkeit der infrastrukturgestützten Verkehrsleiteinrichtung 10a auf Basis eines Vergleichs der Sensordaten SD der infrastrukturgestützten Verkehrsleiteinrichtung und der Referenzsensordaten RSD des Referenzsensors RSK geprüft.

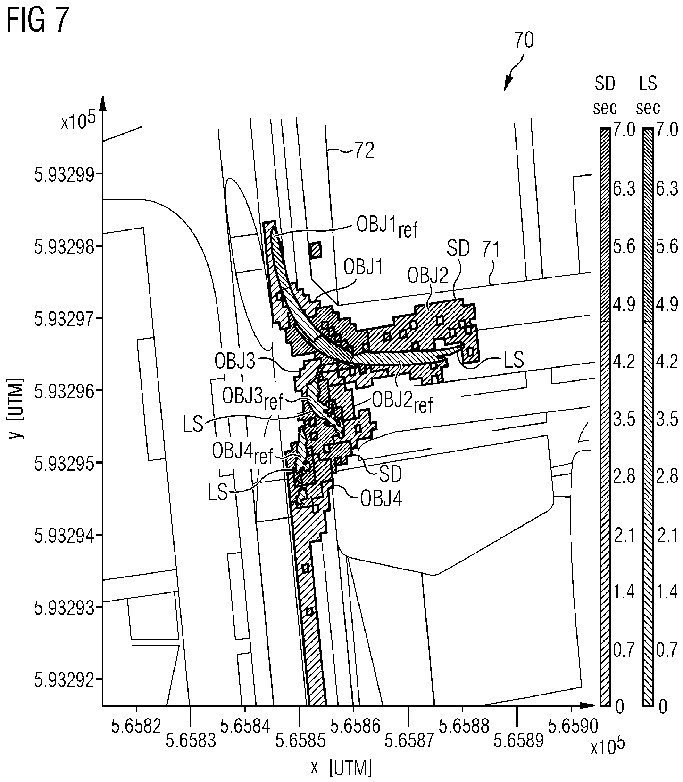

In FIG 7 ist eine schematische Darstellung einer Vergleichsaufnahme 70 von einem Verkehrsgeschehen an einer Einmündung gezeigt. Ein erstes Fahrzeug OBJ1 kommt von rechts aus einer Seitenstraße 71, die in FIG 7 ungefähr horizontal verläuft, und möchte nach rechts auf die Hauptstraße 72 abbiegen die in FIG 7 in etwa vertikal von unten nach oben verläuft, abbiegen. Dem ersten Fahrzeug OBJ1 folgt ein zweites Fahrzeug OBJ2 zu einem späteren Zeitpunkt. Dieser zeitliche Versatz der hintereinanderfahrenden Fahrzeuge OBJ1, OBJ2 ist an den unterschiedlichen Grauwerten bzw. zur besseren Veranschaulichung unterschiedlichen Schraffuren der übereinanderliegenden Leuchtspuren sowie Raster SD zu erkennen. Von links, d.h. in FIG 7 von unten auf der Hauptstraße 72, kommt ein drittes Fahrzeug OBJ3 sowie nach dem dritten Fahrzeug OBJ3 noch ein viertes Fahrzeug OBJ4. Das dritte Fahrzeug OBJ3, OBJ3$_{ref}$ scheint zu demselben Zeitpunkt an der Einmündung zu warten, zu dem das erste Fahrzeug OBJ1 rechts abbiegt. Das dritte Fahrzeug OBJ3 scheint zu warten, bis das von rechts kommende bevorrechtigte erste Fahrzeug OBJ1 abgebogen ist. Das hinter dem dritten Fahrzeug OBJ3 kommende vierte Fahrzeug OBJ4, OBJ4$_{ref}$ ist in dem in FIG 7 gezeigten Szenario noch kurz vor der Einmündung positioniert und wird als nächstes die Einmündung durchqueren. Die Rasterflächen SD der genannten Fahrzeuge OBJ1, OBJ2, OBJ3, OBJ4 in der Belegungskarte OG sind ebenfalls eingezeichnet. Die einander überdeckenden Abschnitte der Raster SD und der Leuchtspur LS weisen ungefähr denselben Zeitpunkten zugeordnete Grautöne bzw. Schraffuren zu, so dass von einer korrekten Funktion der geprüften Infrastrukturleiteinrichtung ausgegangen werden kann, was sowohl die Positionserfassung als auch die korrekte zeitliche Einordnung betrifft. Die georeferenzierten Daten werden über einen Zeitraum von 7 Sekunden erfasst.

Dieser Zeitraum ist abhängig von den erwarteten Geschwindigkeiten sowie der Dichte von Fahrzeugen. Bei höheren Geschwindigkeiten und Verkehrsdichten muss der Zeitraum entsprechend kleiner gegenüber niedrigeren Geschwindigkeiten und Dichten sein. Dadurch wird eine möglichst geringe optische Überlappung erzielt. Ziel dieser Wahl ist es, die manuelle Durchsicht großer Mengen von Sensordaten zu erleichtern und Auffälligkeiten herauszufiltern. Dieses Vorgehen beschleunigt dadurch Entwicklungsprozesse hinsichtlich der Suche von Auffälligkeiten, solange sie nicht vollständig, wie oben beschrieben, automatisiert hinsichtlich Qualität und Verkehrsszenarien hinsichtlich ihrer Gefährdung sind und die Automatisierungen nicht hinreichend verifiziert sind.

Koordinaten sind in UTM (UTM = Universal Tranverse Mercator = universelles transverses Mercatorsystem) dargestellt. UTM teilt die Erdoberfläche streifenförmig in 6° breite vertikale Zonen auf, die einzeln mit der jeweils günstigsten transversalen Mercator-Projektion verebnet werden und mit einem kartesischen Koordinatensystem überzogen werden.

Rechts im Bild ist eine Legende der unterschiedlichen Zeitpunkte (in einem Zeitraum von 7 Sekunden) und unterschiedlichen Sensoren, d.h. den Sensoren der Infrastruktur und dem Referenzsensor zugeordneten Grauwerte bzw. Schraffuren SD, LS dargestellt. Die Datencluster bilden einen diskreten Satz von kategorisierbaren Verkehrsszenarien, die hinsichtlich ihres relativen Gefährdungspotentials bewertet werden. Das jeweilige Gefährdungspotential wiederum determiniert die jeweils durch die ILT zu erreichenden quantitativen Anforderungen. Beispielsweise können Schwellwerte für eine Toleranz oder Abweichung der Sensorik festgelegt werden oder auf Basis der Prüfungen zusätzliche Sensoren in der Infrastruktur nachgerüstet werden, um Sicherheitsanforderungen zu erfüllen.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

**Patentansprüche**

1. Verfahren zur Prüfung der Wirksamkeit einer infrastrukturgestützten Verkehrsleiteinrichtung (10a) mit mindestens einem Verkehrsüberwachungssensor (S1, S2), aufweisend die Schritte:

   - Einbringen eines mobilen Testobjekts (OBJ, OBJ1, OBJ2, OBJ3, OBJ4) in einen Überwachungsbereich (10b) der infrastrukturgestützten Verkehrsleiteinrichtung (10a),
   - Erfassen von Sensordaten (SD) von dem mobilen Testobjekt (OBJ, OBJ1, OBJ2, OBJ3, OBJ4) durch den mindestens einen Verkehrsüberwachungssensor (S1, S2) der infrastrukturgestützten Verkehrsleiteinrichtung (10a),
   - Simultanes sensorielles Erfassen von Referenzsensordaten (RSD) von dem Testobjekt (OBJ, OBJ1, OBJ2, OBJ3, OBJ4) durch mindestens einen stationären Referenzsensor (RSK),
   - Ermitteln einer Wirksamkeit der infrastrukturgestützten Verkehrsleiteinrichtung (10a) auf Basis eines Vergleichs der Sensordaten (SD) der infrastrukturgestützten Verkehrsleiteinrichtung (10a) mit den Referenzsensordaten (RSD) des mindestens einen Referenzsensors (RSK), **dadurch gekennzeichnet, dass** vorab eine Kalibrierung des Referenzsensors (RSK) bezüglich einer Ermittlung einer Position und eines der Position zugeordneten Zeitpunkts erfolgt und eine Kalibrierung einer Messung einer Orientierung durch Ermittlung einer Orientierung eines nicht ausgedehnten Objekts (OBJ, OBJ1, OBJ2, OBJ3, OBJ4) auf Basis der Bewegungsrichtung des Objekts (OBJ, OBJ1, OBJ2, OBJ3, OBJ4) erfolgt.

2. Verfahren nach Anspruch 1, **dadurch gekennzeichnet, dass** eine Kalibrierung einer Messung einer Orientierung eines ausgedehnten Objekts (OBJ, OBJ1) durch eine Ermittlung einer Orientierung des ausgedehnten Objekts (OBJ, OBJ1) auf Basis einer Singulärwertzerlegung oder einer Hauptachsenanalyse erfolgt.

3. Verfahren nach Anspruch 1, **dadurch gekennzeichnet, dass** eine Kalibrierung einer Messung einer Abmessung eines Objekts (OBJ, OBJ1, OBJ2, OBJ3, OBJ4) durch Verfolgung des Objekts (OBJ, OBJ1, OBJ2, OBJ3, OBJ4) erfolgt.

4. Verfahren einem der vorstehenden Ansprüche, wobei die Referenzsensordaten (RSD) einen Referenzzeitstempel (GPS-CLK) umfassen.

5. Verfahren einem der vorstehenden Ansprüche, wobei der Vergleich einen oder mehrere Objektorte (x) des mobilen Testobjekts (OBJ, OBJ1, OBJ2, OBJ3, OBJ4) betrifft.

6. Verfahren nach einem der vorstehenden Ansprüche, wobei der Vergleich die Objektgröße und/oder den Geschwindigkeitsvektor des mobilen Testobjekts (OBJ, OBJ1, OBJ2, OBJ3, OBJ4) umfasst.

7. Verfahren nach einem der vorstehenden Ansprüche, wobei der Vergleich eine statische und/oder dynamische Auswertung einer Leuchtspur (LS) des mobilen Testobjekts (OBJ, OBJ1, OBJ2, OBJ3, OBJ4) umfasst.

8. Verfahren einem der vorstehenden Ansprüche, wobei die Kalibrierung des Referenzsensors (RSK) bezüglich der Ermittlung einer Position und eines der Position zugeordneten Zeitpunkts einer Toleranz von weniger als 0,2 Metern für die Position und von weniger als 10 ms für die Synchronizität zwischen der Sensormessung und der Referenzmessung erfolgt.

9. Infrastrukturgestützte Verkehrsleiteinrichtung (10a) zur Durchführung des Verfahrens nach den vorherstehenden Ansprüchen, aufweisend:

mindestens eine Überwachungssensoreinheit (S1, S2) zur Erfassung von Sensordaten (SD) in einem Überwachungsbereich (10b), mindestens eine Referenzsensoreinheit (RSK) zur Erfassung von Referenzsensordaten (RSD) in dem Überwachungsbereich (10b), eine Vergleichseinheit (TBSC) zum Ermitteln einer Wirksamkeit der infrastrukturgestützten Verkehrsleiteinrichtung (10a) auf Basis eines Vergleichs der Sensordaten (SD) der infrastrukturgestützten Verkehrsleiteinrichtung (10a) und der Referenzsensordaten (RSD) des Referenzsensors (RSK).

10. Autonomes Transportsystem (10, 40) zur Durchführung des Verfahrens nach den vorherstehenden Ansprüchen, aufweisend: mindestens ein zumindest teilautonom gesteuertes Fahrzeug (OBJ, OBJ1), eine infrastrukturgestützte Verkehrsleiteinrichtung (10a) nach Anspruch 9, wobei das zumindest teilautonom gesteuerte Fahrzeug (OBJ OBJ1) dazu eingerichtet ist, von der infrastrukturgestützten Verkehrsleiteinrichtung (10a) erzeugte und geprüfte Sensordaten (SD) zu empfangen und auf Basis dieser Sensordaten (SD) eine zumindest teilautonome Steuerung durchzuführen.

11. Computerprogrammprodukt mit einem Computerprogramm zur Durchführung des Verfahrens nach den vorherstehenden Ansprüchen, welches direkt in eine Speichereinheit eines autonomen Transportsystems (10, 40) ladbar ist, mit Programmabschnitten, um alle Schritte eines Verfahrens nach einem der Ansprüche 1 bis 8 auszuführen, wenn das Computerprogramm in dem autonomen Transportsystem (10, 40) ausgeführt wird.

12. Computerlesbares Medium zur Durchführung des Verfahrens nach den vorherstehenden Ansprüchen, auf welchem von einer Rechnereinheit ausführbare Programmabschnitte gespeichert sind, um alle Schritte des Verfahrens nach einem der Ansprüche 1 bis 8 auszuführen, wenn die Programmabschnitte von der Rechnereinheit ausgeführt werden.

**Claims**

1. Method for testing the effectiveness of an infrastructure-supported traffic management apparatus (10a) having at least one traffic monitoring sensor (S1, S2), comprising the steps of:

- introducing a mobile test object (OBJ, OBJ1, OBJ2, OBJ3, OBJ4) into a monitoring area (10b) of the infrastructure-supported traffic management apparatus (10a),
- acquiring sensor data (SD) from the mobile test object (OBJ, OBJ1, OBJ2, OBJ3, OBJ4) by way of the at least one traffic monitoring sensor (S1, S2) of the infrastructure-supported traffic management apparatus (10a),
- simultaneously acquiring reference sensor data (RSD) from the test object (OBJ, OBJ1, OBJ2, OBJ3, OBJ4) in a sensor-based manner by way of at least one stationary reference sensor (RSK),

- ascertaining an effectiveness of the infrastructure-supported traffic management apparatus (10a) on the basis of a comparison between the sensor data (SD) of the infrastructure-supported traffic management apparatus (10a) and the reference sensor data (RSD) of the at least one reference sensor (RSK), **characterized in that** calibration of the reference sensor (RSK) with regard to ascertainment of a position and of a time assigned to the position is carried out in advance and calibration of a measurement of an orientation is carried out by ascertaining an orientation of a non-extended object (OBJ, OBJ1, OBJ2, OBJ3, OBJ4) on the basis of the direction of movement of the object (OBJ, OBJ1, OBJ2, OBJ3, OBJ4).

2. Method according to Claim 1, **characterized in that** calibration of a measurement of an orientation of an extended object (OBJ, OBJ1) is carried out by ascertaining an orientation of the extended object (OBJ, OBJ1) on the basis of a singular value decomposition or a principal axis analysis.

3. Method according to Claim 1, **characterized in that** calibration of a measurement of a dimension of an object (OBJ, OBJ1, OBJ2, OBJ3, OBJ4) is carried out by tracking the object (OBJ, OBJ1, OBJ2, OBJ3, OBJ4).

4. Method according to one of the preceding claims, wherein the reference sensor data (RSD) comprise a reference time stamp (GPS-CLK).

5. Method according to one of the preceding claims, wherein the comparison relates to one or more object locations (x) of the mobile test object (OBJ, OBJ1, OBJ2, OBJ3, OBJ4).

6. Method according to one of the preceding claims, wherein the comparison comprises the object size and/or the velocity vector of the mobile test object (OBJ, OBJ1, OBJ2, OBJ3, OBJ4).

7. Method according to one of the preceding claims, wherein the comparison comprises a static and/or dynamic evaluation of a luminous trace (LS) of the mobile test object (OBJ, OBJ1, OBJ2, OBJ3, OBJ4).

8. Method according to one of the preceding claims, wherein the calibration of the reference sensor (RSK) with regard to the ascertainment of a position and of a time assigned to the position is carried out with a tolerance of less than 0.2 metres for the position and of less than 10 ms for the synchronicity between the sensor measurement and the reference measurement.

9. Infrastructure-supported traffic management apparatus (10a) for carrying out the method according to the preceding claims, comprising:
at least one monitoring sensor unit (S1, S2) for acquiring sensor data (SD) in a monitoring area (10b), at least one reference sensor unit (RSK) for acquiring reference sensor data (RSD) in the monitoring area (10b), a comparison unit (TBSC) for ascertaining an effectiveness of the infrastructure-supported traffic management apparatus (10a) on the basis of a comparison between the sensor data (SD) of the infrastructure-supported traffic management apparatus (10a) and the reference sensor data (RSD) of the reference sensor (RSK).

10. Autonomous transport system (10, 40) for carrying out the method according to the preceding claims, comprising:
at least one at least semi-autonomously controlled vehicle (OBJ, OBJ1), an infrastructure-supported traffic management apparatus (10a) according to Claim 9, wherein the at least semi-autonomously controlled vehicle (OBJ OBJ1) is set up to receive sensor data (SD) generated and tested by the infrastructure-supported traffic management apparatus (10a) and to carry out at least semi-autonomous control on the basis of this sensor data (SD).

11. Computer program product having a computer program for carrying out the method according to the preceding claims, which is able to be loaded directly into a storage unit of an autonomous transport system (10, 40), having program sections for carrying out all the steps of a method according to one of Claims 1 to 8 when the computer program is executed in the autonomous transport system (10, 40).

12. Computer-readable medium for carrying out the method according to the preceding claims, on which program sections which are able to be executed by a computer unit are stored for carrying out all the steps of the method according to one of Claims 1 to 8 when the program sections are executed by the computer unit.

**Revendications**

1. Procédé destiné à tester l'efficacité d'un dispositif de guidage de circulation (10a) assisté par infrastructure avec au moins un capteur de surveillance de circulation (S1, S2), présentant les étapes :

- introduction d'un objet de test mobile (OBJ, OBJ1, OBJ2, OBJ3, OBJ4) dans une zone de surveillance (10b) du dispositif de guidage de circulation (10a) assisté par infrastructure,

- détection de données de capteur (SD) de l'objet de test mobile (OBJ, OBJ1, OBJ2, OBJ3, OBJ4) par l'au moins un capteur de surveillance de circulation (S1, S2) du dispositif de guidage de circulation (10a) assisté par infrastructure,

- détection simultanée par voie sensorielle de données de capteur de référence (RSD) de l'objet de test (OBJ, OBJ1, OBJ2, OBJ3, OBJ4) par au moins un capteur de référence (RSK) stationnaire,

- détermination d'une efficacité du dispositif de guidage de circulation (10a) assisté par infrastructure sur la base d'une comparaison des données de capteur (SD) du dispositif de guidage de circulation (10a) assisté par infrastructure aux données de capteur de référence (RSD) de l'au moins un capteur de référence (RSK), **caractérisé en ce qu'**au préalable un étalonnage du capteur de référence (RSK) par rapport à une détermination d'une position et d'un moment associé à la position est effectué et un étalonnage d'une mesure d'une orientation est effectué en déterminant une orientation d'un objet non étendu (OBJ, OBJ1, OBJ2, OBJ3, OBJ4) sur la base de la direction de déplacement de l'objet (OBJ, OBJ1, OBJ2, OBJ3, OBJ4).

2. Procédé selon la revendication 1, **caractérisé en ce qu'**un étalonnage d'une mesure d'une orientation d'un objet étendu (OBJ, OBJ1) est effectué par une détermination d'une orientation de l'objet étendu (OBJ, OBJ1) sur la base d'une décomposition en valeurs singulières ou d'une analyse à axes principaux.

3. Procédé selon la revendication 1, **caractérisé en ce qu'**un étalonnage d'une mesure d'une dimension d'un objet (OBJ, OBJ1, OBJ2, OBJ3, OBJ4) est effectué en suivant l'objet (OBJ, OBJ1, OBJ2, OBJ3, OBJ4).

4. Procédé selon l'une des revendications précédentes, les données de capteur de référence (RSD) comprenant un horodatage de référence (GPS-CLK).

5. Procédé selon l'une des revendications précédentes, la comparaison concernant un ou plusieurs emplacements d'objet (x) de l'objet de test mobile (OBJ, OBJ1, OBJ2, OBJ3, OBJ4).

6. Procédé selon l'une des revendications précédentes, la comparaison concernant la taille d'objet et/ou le vecteur de vitesse de l'objet de test mobile (OBJ, OBJ1, OBJ2, OBJ3, OBJ4).

7. Procédé selon l'une des revendications précédentes, la comparaison concernant une évaluation statique et/ou dynamique d'une traînée lumineuse (LS) de l'objet de test mobile (OBJ, OBJ1, OBJ2, OBJ3, OBJ4).

8. Procédé selon l'une des revendications précédentes, l'étalonnage du capteur de référence (RSK) étant effectué par rapport à la détermination d'une position et d'un moment associé à la position avec une tolérance inférieure à 0,2 mètre pour la position et inférieure à 10 ms pour la synchronicité entre la mesure de capteur et la mesure de référence.

9. Dispositif de guidage de circulation (10a) assisté par infrastructure destiné à mettre en œuvre le procédé selon l'une des revendications précédentes, comportant :
au moins une unité de capteur de surveillance (S1, S2) destinée à détecter des données de capteur (SD) dans une zone de surveillance (10b), au moins une unité de capteur de référence (RSK) destinée à détecter des données de capteur de référence (RSD) dans la zone de surveillance (10b), une unité de comparaison (TBSC) destinée à déterminer une efficacité du dispositif de guidage de circulation (10a) assisté par infrastructure sur la base d'une comparaison des données de capteur (SD) du dispositif de guidage de circulation (10a) assisté par infrastructure et des données de capteur de référence (RSD) du capteur de référence (RSK).

10. Système de transport (10, 40) autonome destiné à mettre en œuvre le procédé selon l'une des revendications précédentes, comportant :
au moins un véhicule (OBJ, OBJ1) commandé au moins en partie de manière autonome, un dispositif de guidage de circulation (10a) assisté par infrastructure selon la revendication 9, le véhicule (OBJ, OBJ1) commandé au moins en partie de manière autonome étant mis au point pour recevoir des données de capteur (SD) générées par le dispositif de guidage de circulation (10a) assisté par infrastructure et testées et pour mettre en œuvre une commande au moins en partie autonome sur la base desdites données de capteur (SD).

11. Produit-programme d'ordinateur avec un programme informatique destiné à mettre en œuvre le procédé selon les revendications précédentes, lequel peut être chargé directement dans une unité de mémoire d'un système de transport (10, 40) autonome, avec des segments de programme pour exécuter toutes les étapes d'un procédé selon l'une des revendications 1 à 8 lorsque le programme informatique est exécuté dans le système de transport (10, 40) autonome.

**12.** Support lisible par ordinateur destiné à mettre en œuvre le procédé selon les revendications précédentes, sur lequel sont stockés des segments de programme pouvant être exécutés par une unité de calcul pour exécuter toutes les étapes du procédé selon l'une des revendications 1 à 8 lorsque les segments de programme sont exécutés par l'unité de calcul.

FIG 1

10

10b

S2

S1

OBJ

10a

RSK

OGM

N

α

FIG 2

20

S1

SD

22a

22b

GPS-Clk

GPS-Clk

TBSC

TCCC

RSU

RSU

RSD

RSK

Sn

21a

21b

## FIG 3

## FIG 4

FIG 5

FIG 6

600

6.I

6.III

6.II    OBJ→SD

SD

RSD

6.IV    SD=RSD?

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050203697 A1